Europäisches Patentamt

European Patent Office

Office européen des brevets

(11) Publication number: **0 121 946**
**B1**

(12) EUROPEAN PATENT SPECIFICATION

(45) Date of publication of patent specification: **07.12.88**　(51) Int. Cl.⁴: **F 16 K 5/06**

(21) Application number: **84104083.5**

(22) Date of filing: **11.04.84**

(54) Seal mechanism in a ball valve.

(30) Priority: **12.04.83 JP 64218/83**

(43) Date of publication of application:
**17.10.84 Bulletin 84/42**

(45) Publication of the grant of the patent:
**07.12.88 Bulletin 88/49**

(84) Designated Contracting States:
**DE FR IT**

(56) References cited:
**EP-A-0 096 645**
**AT-B- 295 268**
**DE-A-1 550 627**
**DE-U-1 943 201**
**US-A-3 446 475**

**PATENT ABSTRACTS OF JAPAN, vol. 4, no.
105, 26th July 1980, page 20 M 23 (M-23) (587);
& JP-A-55-63061 (KOBE SEIKOSHO) 12-05-1980**

(73) Proprietor: **KABUSHIKI KAISHA KOBE SEIKO
SHO also known as Kobe Steel Ltd.
3-18 1-chome, Wakinohama-cho Chuo-ku
Kobe 651 (JP)**

(72) Inventor: **Sadayuki, Nakanishi
29, Gyogi-cho 3-chome Itami
Hyogo-ken (JP)**
Inventor: **Kenichi, Hayama
5-106, Tomogaoka 5-chome
Suma-ku Kobe (JP)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)**

## Description

This invention concerns a seal mechanism in a ball valve according to the pre-characterizing portion of the claim.

Seal members for use in ball valves include elastic seats made of rubber or the like having a relatively soft nature and plastic sheets or metal seat having a relatively high hardness. Since the latter rigid seats lack in the sealing performance under the cold temperature condition such as at several tens centigrade below the freezing point, it is desirable to use the former elastic seat under such a circumstantial condition.

However, since the elastic seat is soft in nature, it involves a problem in that the portion of the seat that initially faces the through-hole of a ball-like valve body upon initial stage of the valve opening operation will bulge out of a seat retaining groove.

A counter-measure for dissolving such a problem is proposed in JP-A-55063061 which is illustrated in Figure 1.

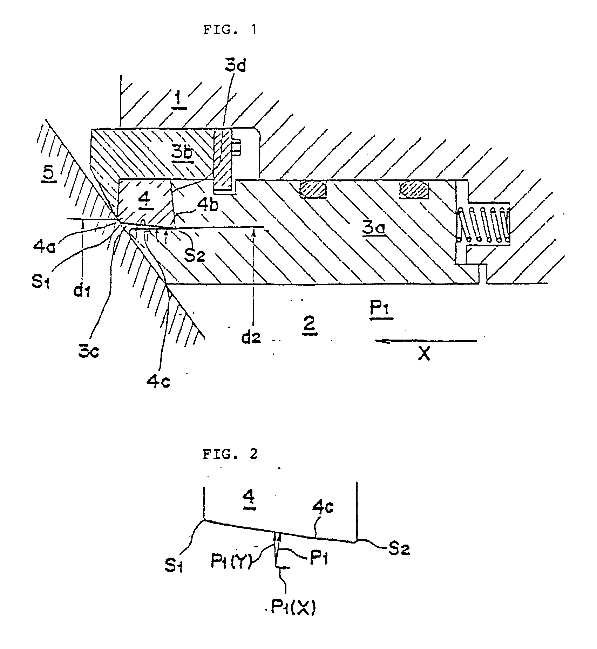

In a ball valve illustrated in Figure 1, a half-groove is formed along the outer periphery at the top end of an inner ring 3a and a half-groove is formed along the outer periphery at the top end of an outer ring 3b, and the half-grooves constitute a seat retaining groove 3c. A valve seat 4 made of rubber is tightly enforced into the groove 3c and adapted such that the radial dimension d1 for a sealing point S1 at the corner 4a on the top end along the inner circumferential surface of the valve seat in pressure contact with a ball-like valve body 5 while bulging out of the seat retaining groove 3c is made larger than the radial dimension d2 for a sealing point S2 at the corner 4b on the end opposite to the top end (hereinafter referred to as a counter top end) along the inner circumferential surface of the valve seat that faces the side wall 3d on the counter-top end of the inner ring 3a that forms the above mentioned half-groove.

According to the foregoing structure, as illustrated in Figure 2, since the inner circumferential surface 4c of the seat 4 is inclined, the fluid pressure P1 acting vertically on the inner circumferential surface 4c is exerted as a component P1(Y) directed radially outwardly and as a component P1(X) directed away from the valve body with respect to the fluid passing direction, whereby the seat 4 is always enforced into the groove 3c and, accordingly, the seat can effectively be prevented from bulging out of the groove.

However, the seal mechanism constituted as described above having the seat 4 made of rubber provides a problem that the effective prevention for the bulge of the seat 4 can no more be ensured if the fluid pressure P1 increases higher than about 120 kg/cm².

In view of the above, the present inventors have studied the foregoing problem and found that the bulging phenomenon of the seat as described above is caused by the following manner.

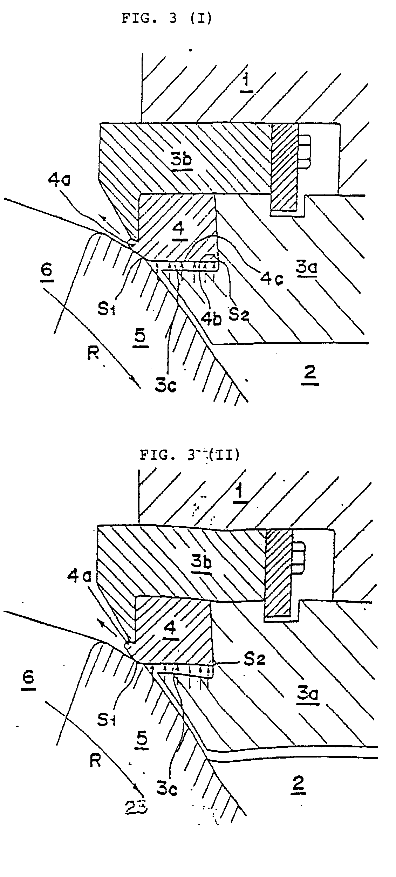

Specifically, when the valve body 5 is revolved in the direction of an arrow R as shown in Figure 3(I) and a portion of the seat 4 is going to apart from the circumferential surface 4c of the seat 4, the corner 4a of the seat is bulged to the outside of the groove since a high pressure, e.g., of greater than 120 kg/cm² is applied to the inner circumferential surface 4c of the seat 4. Then, accompanying the bulge or the protrusion of the corner 4a, the sealing point S1 displaces radially inwardly. On the contrary, since the volume of the seat 4 is constant, the corner 4b on the counter top end displaces radially outwardly, by the amount corresponding to the bulge of the corner 4a. Then, when the valve body 5 is further opened as shown in Figure 3(II), the abovementioned phenomenon becomes more conspicuous, till the diameter for the sealing point S2 goes greater than the diameter for the sealing point S1, where the fluid pressure comes to act in the direction of enforcing the seat 4 out of the groove 3c. Thus, when the seat 4 completely detaches from the valve body 5 and opposes to the through hole 6, the relevant portion of the seat 4 instantaneously bulges out of the retaining groove 3c. As described above, the bulging phenomenon of the seat is caused, upon valve opening action taken under the state where a high fluid pressure is being applied to the inner circumferential surface of the seat, by the change that the radial size for the sealing point S1 of the seat 4 relative to the valve body is decreased as compared with the radial size for the sealing point S2 of the seat relative to the side wall on the counter-top end of the inner ring.

Accordingly, the technical problem to be overcome by the present invention resides in maintaining the radial size for the sealing point S1 always greater than the radial size for the sealing point S2 even when a high fluid pressure is applied to the inner circumferential surface of the seat.

This object is achieved by the features of the characterizing portion of the claim.

In accordance with the foregoing structure, since the counter-top end of the inner circumferential surface of the valve seat bulges into the inside of the inner groove of the inner ring when the fluid pressure is exerted in the direction of compressing the valve seat relative to the inner ring, that is, when the valve is operated, the sealing point S2 for the corner on the counter-top end of the inner circumferential surface of the seat is displaced radially inwardly to the corner on the counter-top end of the inner groove. Upon valve opening, if a portion of the seat is going to detach from the valve body, the corner on the top end along the inner circumferential surface of the seat would bulge outwardly from the retaining groove in the same manner as in the prior art. However, since there is a radial step between the top end along the inner circumference of the seat and the counter-top end along the inner circumference of the seat bulging into the inner groove, the component of the fluid pressure acting to the inner circumferential surface of the seat in direction to the the counter-top end becomes greater, to enforce the counter-top end along the inner circumference of the seat into the inner groove and, accordingly, the extent of the protrusion tending to bulge out of the retaining groove is reduced as compared with that in the prior art. Then, even if the amount of the seat bulging out of the retaining groove is increased to displace the sealing point S1 radially inwardly, the radial dimension for the sealing point S1 is not made smaller than the radial dimension for the circumferential wall from the inner groove to the top end in the half-groove of the inner ring. While on the other hand, the sealing point S2 is displaced to the corner on the counter-top end of the inner groove as described above. Therefore, the radial dimension for the sealing point S1 is not made smaller than the seal point S2, whereby an intended technical subject can be attained and the bulge of the seat from the retaining groove can effectively be prevented even when the fluid pressure exceeds 120 kg/cm².

In the present invention, since it is adapted such that an inner groove is provided to the circumferential wall formed on the top end of the inner ring and the counter-top end along the inner circumferential surface of the seat is caused to bulge into the inner groove by utilizing the elastic deformation of the elastic seat such as made of rubber, it provides advantages of not complicating the structure of the seal mechanism at all and reducing the manufacturing cost as compared with those in the prior art, as well as enjoying a sufficient sealing performance even under cold conditions.

DE-U-1 943 201 discloses a seat retaining groove of the integral type having constant volume. The use of a soft rubber material for the valve seat is therefor not possible. If this seat mechanism is subjected to a high fluid pressure, this fluid pressure pushes and expands the top end of the valve seat adjacent to the inner diameter of the seat retaining groove toward a triangular spacing. Since the bottom wall of the seat retaining groove is perpendicular with respect to the inner groove, the top end of the valve seat is radially expanded so that the initial sealing point diameter will become equal or, depending on the top end of the valve seat and the triangular spacing, will become smaller than the diameter of the sealing point between the valve seat and the bottom of the groove which, in connection with increasing fluid pressure, is displaced radially outwardly.

The invention will be better understood by the following description which are made in conjunction with the appended drawings, wherein Figure 1 is a cross sectional view for a part of a ball valve seat mechanism in the prior art,

Figure 2 is an explanatory view showing the state where the fluid pressure is exerted to the inner circumferential surface of the seat in Figure 1,

Figures 3(I) and (II) are explanatory cross sectional views respectively showing the state where the seat bulges out of a retaining groove,

Figure 4(I) is a cross sectional view for a part of a seal mechanism as a preferred embodiment according to the present invention,

Figure 4(II) is an enlarged cross sectional view for a part of the inner ring in a state where the seat is urged to the valve body in Figure 4(I) and

Figure 5 is a cross sectional view of the seat shown in Figures 4(I) and (II).

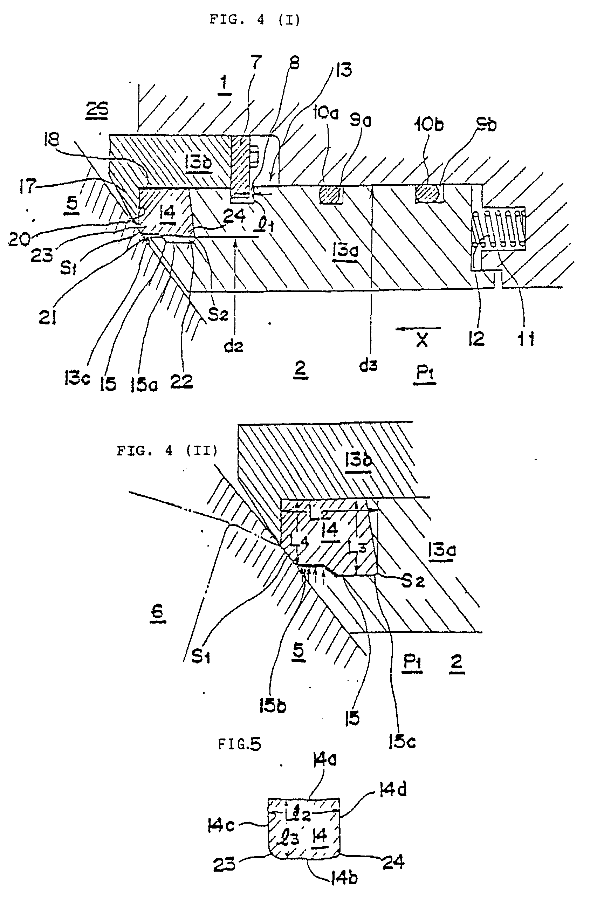

A preferred embodiment according to the present invention will now be described with reference to Figures 4(I) and (II).

As illustrated in Figunre 4(I), a ball valve comprises a valve housing 1 having an annular valve seat retainer 13 which is fitted movably in the forward and the backward directions along the flowing direction of a fluid in a fluid conduit 2. An annular valve seat 14 made of rubber is retained in the valve seat retainer 13 for performing a fluid-tight sealing while being in contact with the circumferential surface of a ball-like valve body 5. The valve seat retainer 13 comprises an inner ring 13a and an outer ring 13b which is tightly fitted to the outer circumference thereof and movable in the backward and the forward directions along the fluid passing direction, and the valve seat is fitted within a valve seat retaining groove 13c formed between the outer circumference on the top end of the inner ring 13a and the inner circumference on the top end of the outer ring 13b. Referring more in details, a recessed annular groove 8 is formed at a predetermined position around the outer circumference of the inner ring 13a and an annular flange 7 is secured at the end face on the counter-top end of the outer ring 13b. The inner circumferential part of the flange 7 is loosely fitted within the recessed groove 8 of the inner ring 13a. Accordingly, the outer ring 13b can be displaced forwardly and backwardly along the outer circumference of the inner ring 13a in the fluid passing direction X within a range of the difference I1 between the thickness of the flange and the lateral size of the recessed groove in the inner ring 13a. Furthermore, annular recessed grooves 9a, 9b are formed around the outer circumference of the inner ring 13a in which are fitted O-rings 10a, 10b respectively that are kept in contact with the inner circumference of the valve housing 1 for making a liquid-tight sealing. Further, a spring 11 is contained in a spring chamber 12 formed at a predetermined portion along the inner circumferential surface of the valve housing 1. One end of the spring 11 abuts against the side wall on the counter-top end of the inner ring 13a to thereby always urge the entire inner ring 13a in the fluid passing direction X.

Referring now to the valve seat retaining groove 13, it is constituted as specified below. A half-groove 22 generally of an L-shaped cross section is provided on the top end around the outer circumference of the inner ring 13a. The half-groove 22 is defined with a circumferential wall 15 constituting a surface along with the fluid passing direction X, that is, the same direction as the axial direction of the inner ring and with a side wall on the counter-top end inclined such that the outer circumferential side thereof is somewhat protruded toward the top end with respect to the plane in perpendicular to the axis, that is, an inclined wall. Further, an inner groove 15a is formed at the counter-top end of the circumferential wall 15. While on the other hand, the outer ring 13b has a protrusion 17 formed on the top end around the inner circumference thereof and constitutes a half groove 20 generally of an L-shaped cross section which is defined with a wall 18 formed on the inner side of the protrusion 17 in perpendicular to the axial direction and an inner circumferential wall of the outer ring. Thus, the half groove 22 in the inner ring 13a and the half-groove 20 in the outer ring 13b are joined to constitute a valve scat retaining groove 13c generally of a rectangular cross section. It should, however, be noted that an opening 21 is formed between the protrusion 17 from the outer ring 13b and the top end of the wall 15 of the inner ring 13a in parallel with the axis.

While on the other hand, the annular valve seat 14 made of rubber has a cross sectional shape which is generally the same as that of the valve seat retaining groove 13c, Specifically, the outer circumferential face 14a and the inner circumferential face 14b are in parallel with each other and the top end face 14c and the counter-top end face 14d are in parallel with each other respectively to define a generally rectangular cross section, except that the corner 23 on the top end of the inner circumferential face 14b is rounded. The lateral size for the thickness l2 of the valve seat 14 is made identical with the longest lateral size L2 for the valve seat retaining groove 13c. Further, the vertical size for the thickness l3 of the valve seat 14 is made smaller than the vertical size L3 at the counter-top end of the valve seat retaining groove 13c and is made equal to or slightly smaller than the vertical size L4 at the top end.

The valve seat 14 having the foregoing structure is tightly fitted within the valve seat retaining groove 13c and deformed as shown in Figure 4(I). That is, since the lateral size for the valve seat retaining groove 13c is narrowed toward the outer circumference, the side face 14a on the counter-top end of the valve seat 14 is compressed not uniformly. Namely, since the outer side of the valve seat 14 is compressed more intensely, the corner 24 on the counter-top end of the valve seat is displaced radially and more inwardly along the inclined wall 16 than the corner 23 on the top end. The corner 23 on the top end bulges out of the opening 21 in the valve seat retaining groove 13c to be in contact with the circumferential surface of the ball-like valve body 5. Consequently, the contact point Sl forms a sealing point relative to the circumferential surface of the ball-like valve body 5. A certain clearance is formed between the inner circumferential surface 14b of the valve seat 14 and the circumferential wall 15 of the valve seat retaining groove 13c.

When a fluid pressure P1 exerts on the inner ring 13a, since the diameter d3 for the sealing point relative to the inner circumferential surface of the valve housing 1 is greater than the diameter d1 for the sealing point relative to the circumferential surface of the ball-like valve body 5, the inner ring 13a is displaced in the fluid passing direction X to produce a so-called self-tightening force. Figure 4(II) shows such a state. Then, the counter-top end face 14d of the valve seat 14 is further urged to the inclined wall 16 of the valve seat retaining groove 13c, and the corner 24 on the counter-top end thereof is further displaced inwardly than the corner 23 on the top end. In this case, the counter-top end along the inner circumferential part of the seat 14 bulges into the inner groove 15a to fill the inside thereof. The surface pressure of the side face 14d on the counter-top end of the valve seat 14 to the inclined wall 16 is made greater toward the outer side. Then, it becomes difficult for the fluid to intrude between the side face 14d on the counter-top of the valve seat 14 and the inclined wall 16 of the valve seat retaining groove 13c, whereby the sealing point of the valve seat 14 against the wall surface of the valve seat retaining groove 13c transfers to the point S2 where the corner 24d on the counter-top end of the valve seat 14 is in contact with the inclined wall 16, that is, to the corner 15c on the counter-top end of the inner groove 15c. As the result, since the diameter d1 for one sealing point S1 is further increased relative to the diameter d2 for the other sealing point S2 and the component of the fluid pressure exerting on the inner circumferential surface 14b of the seat 14 in the direction to the counter-top end is extremely increased, the fluid pressure P1 acts to enforce the valve seat 14 into the valve seat retaining groove 13c.

Then, when the valve body 5 is opened as shown by the dotted chain in Figure 4(II) and the corner 23 on the top end along the inner circumferential surface of the seat 14 is going to detach from the circumferential surface of the valve body 5, the portion 23 tends to bulge out of the groove 22 in the same manner as in the prior art. The degree of the protrusion increases in accordance with the proceeding of the valve opening and the sealing point S1 is gradually displaced radially inwardly, but the sealing point S1 can not displace inwardly beyond the top end 15b along the circumferential wall 15 of the inner ring 13a, that is, the portion having a greater radial size than that of the bottom surface in the inner groove 15a. While on the other hand, the sealing point S2 is situated at the corner 15c of the inner groove 15a. Therefore, it is secured that the sealing point S1 is always situated at a larger diameter side relative to the sealing point S2, whereby the seat 14 can effectively be prevented from bulging out of the groove 22.

Moreover, the degree of protrusion of the seat itself can also be decreased as compared with that in the prior art in accordance with the present invention, because the inner circumference 15 of the inner ring 13a is made stepwise by the formation of the inner groove 15a so as to increase the component of the fluid pressure P1 exerting on the inner circumferential face 14b of the seat 14 in the direction to the counter-top end thereby causing the counter-top end along the inner circumferential part of the seat 14 to bulge into the inner groove 15a.

In the foregoing embodiment according to the present invention, the seat can be prevented from bulging even when a fluid pressure is as high as 160 kg/cm².

## Claim

A seal mechanism in a ball valve, in which a valve seat (14) made of an elastic material such as rubber is enforced under pressure into a seat retaining groove (13c) defined with a first half-groove (22) having a circumferential wall (15) and a side wall formed along the outer circumference on the top end of an inner ring (13a) and a second half-groove (20) formed along the inner circumference on the top end of an outer ring (13b) said seat retaining groove (13c) being filled up by said valve seat (14), and a first diameter (d1) for a first sealing point (S1) at a first corner (23) on the top end along the inner circumferential surface of said valve seat (14) bulging out of said seat retaining groove (13c) to be in press contact with a ball-like valve body (5) is made greater than a second diameter (d2) for a second sealing point (S2) at a second corner (24) on the counter-top end along the inner circumferential surface of said valve seat (14) facing said side wall on the counter-top end of said inner ring (13a) that constitutes said first half-groove (22), characterized in that an inner groove (15a) is formed at a part on the counter-top end along said circumferential wall (15) of said inner ring (13a) that constitutes said first half-groove (22), said inner groove (15a) being free of said valve seat (14) if said seal mechanism is not under pressure, and that the counter-top end along the inner circumferential surface of said valve seat (14) is adapted to bulge into said inner groove (15a) when a fluid pressure ($P_1$) is exerted to said inner ring (13a) in the direction of compressing said valve seat (14).

## Patentanspruch

Dichtungsmechanismus in einem Kugelventil, in dem ein aus einem elastischen Werkstoff, beispielsweise aus Gummi hergestellter Ventilsitz (14) unter Druck in eine Sitzbefestigungsnut (13c) eingefüllt wird, die durch eine erste Halbnut (22) mit einer Umfangswand (15) und einer längs dem Außenumfang am Oberende eines Innenrings (13a) geformten Seitenwand und eine zweite Halbnut (20) gebildet wird, die längs dem Innenumfang am Oberende eines Außenrings (13b) geformt ist, wobei die Sitzbefestigungsnut (13c) durch den Ventilsitz (14) ausgefüllt ist und wobei ein erster Durchmesser (d1) für einen ersten Dichtungspunkt ($S_1$) an einer ersten Kante (23), die am Oberende längs der Innenumfangsfläche des Ventilsitzes (14) aus der Sitzbefestigungsnut (13c) ausbaucht, so daß sie in Druckberührung mit einem kugelförmigen Ventilkörper (5) ist, größer als ein zweiter Durchmesser (d2) für einen zweiten Abdichtungspunkt ($S_2$) an einer zweiten Kante (24) ist, die sich am dem oberen entgegengesetzten Ende längs der Innenumfangsfläche des Ventilsitzes (14) erstreckt, die der Seitenfläche am dem oberen Ende entgegengesetzten Ende des Innenrings (13a) gegenüberliegt, der die erste Halbnut (22) bildet, dadurch gekennzeichnet, daß eine Innennut (15a) an einem Abschnitt am dem oberen Ende entgegengesetzten Ende längs der Umfangswand (15) des Innenrings (13a), der die erste Halbnut (22) ausbildet, ausgestaltet ist, wobei die Innennut (15a) vom Ventilsitz (14) frei ist, wenn der Dichtungsmechanismus nicht unter Druck steht, und daß das dem oberen entgegengesetzte Ende längs der Innenumfangsfläche des Ventilsitzes (14) derart ausgeführt ist, daß es in die Innennut (15a) ausbaucht, wenn ein Fluiddruck ($P_1$) in der Richtung auf den Innenring (13a) ausgeübt wird, in der der Ventilsitz (14) zusammengedrückt wird.

## Revendication

Un dispositif d'étanchéité dans un robinet à tournant sphérique, dans lequel un siège de robinet (14) réalisé en un matériau élastique tel que du caoutchouc, est enfoncé à force sous pression dans une gorge retenant le siège (13c) définie par une première demi-gorge (22) ayant une paroi circonférentielle (15) et une paroi latérale formée le long de la circonférence extérieure sur l'extrémité supérieure d'une bague intérieure (13a) et une seconde demi-gorge (20) formée le long de la circonférence intérieure sur l'extrémité supérieure d'une bague extérieure (13b) ladite gorge retenant le siège (13c) étant complètement remplie par ledit siège de robinet (14), et un premier diamètre (d1) pour un premier point d'étanchéité ($S_1$) en un premier coin (23) sur l'extrémité supérieure le long de la surface circonférentielle intérieure dudit siège de robinet (14) sortant de ladite gorge retenant le siège (13c) pour être comprimé contre un corps de robinet analogue à une bille (5) qui est plus grand qu'un second diamètre (d2) pour un second point d'étanchéité ($S_2$) en un second coin (24) sur l'extrémité supérieure opposée le long de la surface circonférentielle intérieure dudit siège de robinet (14) en regard de ladite paroi latérale sur l'extrémité supérieure opposée de ladite bague intérieure (13a) qui constitue ladite demi-gorge (22), caractérisé en ce qu' une rainure intérieure (15a) est formée en une partie sur l'extrémité supérieure opposée le long de ladite paroi circonférentielle (15) de ladite bague intérieure (13a) qui constitue ladite première demi-gorge (22), ladite rainure intérieure (15a) étant dégagée dudit siège de robinet (14) si ledit dispositif d'étanchéité n'est pas sous pression et en ce que l'extrémité supérieure opposée le long de la surface circonférentielle intérieure dudit siège de robinet (14) est destinée à se déformer pour faire saillie dans ladite rainure intérieure (15a) lorsqu'une pression de fluide ($P_1$) est exercée sur ladite bague inté- rieure (13a) dans la direction de compression dudit siège de robinet (14).

FIG. 1

FIG. 2

FIG. 3 (I)

FIG. 3 (II)

EP 0 121 946 B1

FIG. 4 (I)

FIG. 4 (II)

FIG.5

3